# EUROPEAN PATENT SPECIFICATION

(11) **EP 1 723 486 B1**
(45) Date of publication and mention of the grant of the patent: **30.09.2009**
(21) Application number: 05705507.1
(22) Date of filing: 12.01.2005
(51) Int. Cl.: H01S 3/04, H05K 7/20, F28F 3/02

(54) **LASER COOLING SYSTEM AND METHOD**
LASERKÜHLSYSTEM UND LASERKÜHLVERFAHREN
SYSTEME ET PROCEDE DE REFROIDISSEMENT DE LASER

(30) Priority: 12.01.2004 US 535549 P; 30.08.2004 US 605157 P; 27.10.2004 US 622054 P
(43) Date of publication of application: 22.11.2006
(73) Proprietor: Litelaser L.L.C., Bloomfield Hills, MI 48304 (US)
(72) Inventor: MONTY, Nathan, Paul, Charlton, MA 01507 (US); ARMBRUSTER, Kevin, L., Chicopee, MA 01020 (US); LIND, Kenneth, Andrew, Brimfield, MA 01011 (US)
(74) Representative: Hess, Peter K. G.
(86) International application number: PCT/US2005/000881
(87) International publication number: WO 2005/070159

(56) References cited:
- GB-A- 2 253 515
- JP-A- 6 268 285
- JP-A- 8 008 493
- JP-A- 2002 329 928
- TW-B- 535 489
- US-A- 3 763 442
- US-A- 4 750 186
- US-A- 4 926 935
- US-A- 5 481 556
- US-A- 5 625 229
- US-A1- 2002 048 295
- US-A1- 2002 054 615
- US-B1- 6 230 789
- US-B1- 6 625 025

## Description

### FIELD OF THE INVENTION

The present invention relates to lasers, more particularly to providing lasers with suitable cooling fins.

### BACKGROUND OF THE INVENTION

Typical cooling of a laser utilizes cooling fin arrays coupled with fans to convect heat away from the laser. The fins are typically milled into the body of the laser housing or are part of an extruded heat sink that is bolted to the laser body. In either case the milling or extruding limits the size, pitch and shape of the resulting fins. In particular, heat transfer is largely dependent on the heat transfer surface area. When milling fins, the pitch of the fins, i.e. the number of fins per unit distance, is limited by the milling tool size. The extrusion process has limits on fin width, fin pitch and the fin width to length ratio.

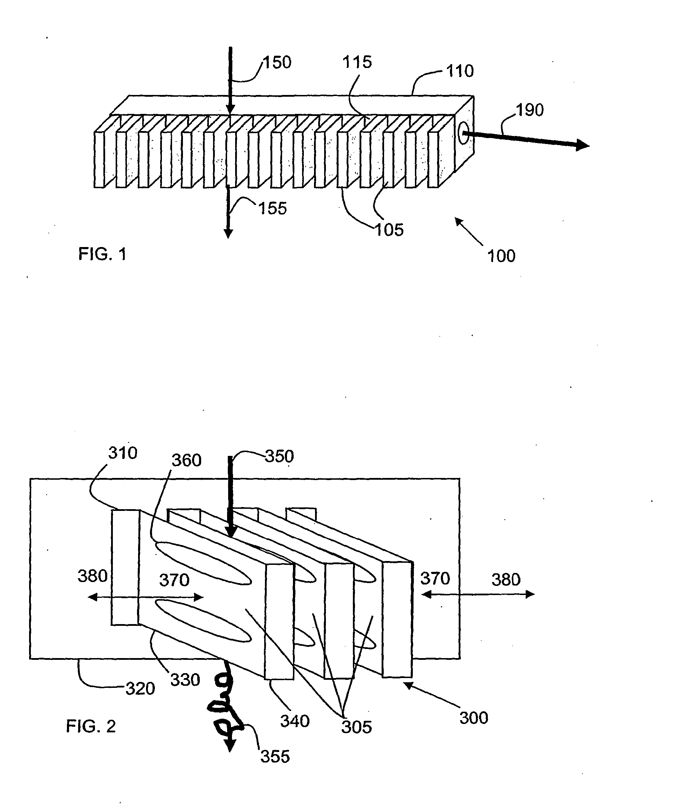

Figure 1 illustrates a conventional laser package 100, having a laser module 110 with an associated laser beam 190 also being illustrated. The laser module 110 has a cooling face 115 on one side from which an array of cooling fins 105 extends. The cooling fins 105 serve to conduct heat away from the laser module 110. The heat from the fins 105 is convected away via a fluid flow indicated by arrows 150 and 155, which may typically be a flow of air or water. The construction of the fin array as a flat, parallel set of fins means that the fluid flow remains substantially laminar as it passes over the fins 105.

The heat transfer characteristics of the cooling system are important for the operation of the laser. For example, provision of a better heat transfer mechanism could allow either improved laser operating characteristics to be obtained or a more compact cooling system to be provided.

### SUMMARY OF THE INVENTION

According to a first aspect of the invention there is provided a laser system comprising: a laser module having a cooling face; and heat exchange element constructed as at least one folded sheet of thermally conductive material comprising a plurality of flat portions connected in thermal contact with the cooling face, and a plurality of interconnecting portions extending between the flat portions and away from the cooling face to form cooling fins.

Using a folded sheet as a basis for the cooling fins is not only highly convenient from an assembly point of view, and inexpensive, but also provides for highly effective heat exchange away from the laser module. First, the folded sheet can be attached to the laser module cooling face with a large area of good thermal contact via its flat portions. Second, the fins formed by the interconnecting portions of the sheet can present a high-drag to a fluid flow being forced past the fins by a fan or pump, thereby inducing significant turbulence which is an aid to carrying heat away from the fins. As a result a highly efficient heat exchanger can be provided in a small size.

Typically the thermally conductive material which the folded sheet is made of will be a metal, most preferably aluminum. Another suitable metal is copper which has a high thermal conductivity but is more expensive and more difficult to work with. Other materials could also be used.

The interconnecting portions may be two or more flat portions separated by folds, or may be a single bowed portion. For example, if the interconnecting portions are formed of two flat portions, then the fins will have a generally triangular profile. Another example is when the interconnecting portions are formed of three flat portions to provide a trapezoidal profile. In this case, the middle flat portion may be parallel to the cooling face.

The cooling fins can be formed from a flat sheet by a punching process known as lancing. The cooling fins may be referred to as lanced offset fins.

In some embodiments the cooling fins extend in a plurality of strips arranged alongside each other such that the cooling fins in adjacent ones of the strips are offset from one another. This staggered fin design can further increase turbulent flow, thereby further increasing the thermal transfer efficiency between the fins and the cooling fluid. Multiple strips of mis-aligned cooling fins can be manufactured using a separate sheet for each strip, or by forming multiple strips in one sheet. In the latter case, the fin pattern can be created from a flat sheet using lancing by stretching or otherwise moving the sheet between lancing steps to produce the desired offset between adjacent strips. If the offset is 50% (i.e. half a period) and the fins extend over a length roughly equal to the length of the flat portions, then after the lancing adjacent strips are barely connected, and the sheet can be considered to have two sets of aligned strips interleaved with one another.

The flat portions are preferably connected to the cooling face with a bond, such as with a thermally conductive adhesive (e.g. epoxy resin) or a brazing solder. In principle, fasteners could be used instead, but this is not preferred from an ease of assembly point-of-view and may also not maximize thermal contact unless used in combination with bonding.

In some embodiments, the interconnecting portions are apertured. Single or multiple apertures may be provided in each interconnecting portion as desired. These apertures further assist cooling by facilitating turbulence in fluid flowing past the fins.

According to a second aspect of the invention there is provided a method of assembling a laser package, the method comprising: providing a laser module having a cooling face; providing a folded sheet of thermally conductive material comprising a plurality of flat portions arrangeable on a common plane and a plurality of interconnecting portions extending between the flat portions and away from the common plane to form fins; and bonding the flat portions of the folded sheet to the cooling face so that the folded sheet forms a heat exchange element for the laser module with the interconnecting portions extending away from the cooling face to form cooling fins.

This method of assembly is particularly convenient and efficient. In this way, the folded sheet can be simply offered up and attached to the laser module in a single step.

The best mode is to place a thermally conductive adhesive between the cooling face and the flat portions of the folded sheet. An alternative is to use brazing solder instead.

A further significant advantage of using a folded sheet is that the folded sheet can be provided so that it is extensible and compressible by its interconnecting portions. The folded sheet can then be extended or compressed by a desired amount before bonding it to the cooling face in its extended or compressed state. This allows adjustment of the fin spacing, and the distance of maximum extent of the fins from the cooling face. This kind of freedom is not possible with a conventional fin array where the fin size and pitch is fixed at the time of manufacture of the fin array. It is possible to exploit this design freedom by varying the fin spacing according to the cooling requirements. Moreover, the fin spacing can be varied along a single sheet by different degrees of extension or compression along different portions, for example to provide different cooling capacity along the length of a ,cooling face to take account of hot spots. The folded sheet is thus extended or compressed by different amounts along different sections thereof so that the flat portions are separated by different amounts in the different sections.

Further areas of applicability of embodiments of the present invention will become apparent from the detailed description provided hereinafter. It should be understood that the detailed description and specific examples, while indicating exemplary embodiments of the invention, are intended for purposes of illustration only and fail to limit the scope of the invention.

### BRIEF DESCRIPTION OF THE DRAWINGS

Embodiments of present invention will become more fully understood from the detailed description and the accompanying drawings, wherein:

Figure 1 is an illustration of a conventional laser with an attached cooling fin array according to the prior art;

Figure 2 is an illustration of a first embodiment of the invention;

Figure 3 is an illustration of a second embodiment of the invention; and

Figure 4 is an illustration of an assembled laser system embodying the invention.

### DETAILED DESCRIPTION OF EXEMPLARY EMBODIMENTS OF THE PRESENT INVENTION

The following description of exemplary embodiment(s) is merely illustrative in nature and is in no way intended to limit the invention, its application, or uses.

Although the discussion herein may not discuss all details associated with the cooling of laser systems, such details, as known by one of ordinary skill, are intended to be included within the scope of embodiments discussed herein.

Fluid cooling of a laser system (e.g. air, gas, water, and other fluids as can be used as determined by one of ordinary skill), can involved flowing the fluid over a fin array, where the fin array conducts heat from the laser. The heated fin array in turn heats the flowing fluid, which convects the heat away from the fin array. The heated portion of the fluid flow depends upon the area of the fin array, the thermal transfer efficiency between the fins and the cooling fluid, and the volume of the fluid passing over the fin array. Laminar fluid flow has a lower heat transfer coefficient than the same volume of turbulent fluid flow.

To create turbulent flow at least one exemplary embodiment can include fins with turbulence increasing features (e.g. ridges, creases, discontinuities, abrasions, protrusions, steps, bends in the fins, and other shapes and/or additions that one of ordinary skill would understand increases turbulent flow). The fin array, attached to a laser, conducts heat from the laser, which is carried away by a fluid flow. In at least one embodiment, the fin array includes fins, which can be of various shapes. In at least one exemplary embodiment the fins are made from folded heat conductive material (e.g. Aluminum, Cu, Fe, alloys including these metals, and other heat conductive material known to one of ordinary skill). Folded fins allow for far greater fin cooling area in the same volume than extruded or milled fin arrays can obtain.

Figure 2 illustrates a first embodiment. The fins 305 are made from a folded metal sheet available from NDM/Kintex Company, Niagara Falls, New York, USA. Other thermally conductive material could also be used. The folded sheet has flat base portions 310 attached to a cooling face 32 of a laser module. The fins are made from the base portions 310, and interconnecting side and end portions 330 and 340 respectively, which together form cooling fins 305. The side portions 330 each contain two apertures 360 which are provided to induce turbulence.

To change the surface cooling area, the number of fins per unit distance in the direction perpendicular to the folds can be varied by extending or compressing the flexible folded sheet prior to attachment to the cooling face 320 of the laser module.

The fin array 300 can be attached to a portion of the laser 320 (e.g. by fasteners, thermal epoxy, welding, brazing, or other connection mechanisms as understood by one of ordinary skill). In the best mode, the fin array is bonded to the laser module with a thermally conductive epoxy resin, namely Cast-Coat Inc. #CC3-450.

A device (e.g. fan or pump) can move the fluid flow 350 parallel to the fins 305, where the features 360 interrupt a portion of the fluid flow increasing the turbulence of the fluid flow 355. The increased turbulent fluid flow 355 increases heat transfer efficiency between heated fins and the fluid flow. Various fin shapes are intended to lie within the scope of embodiments.

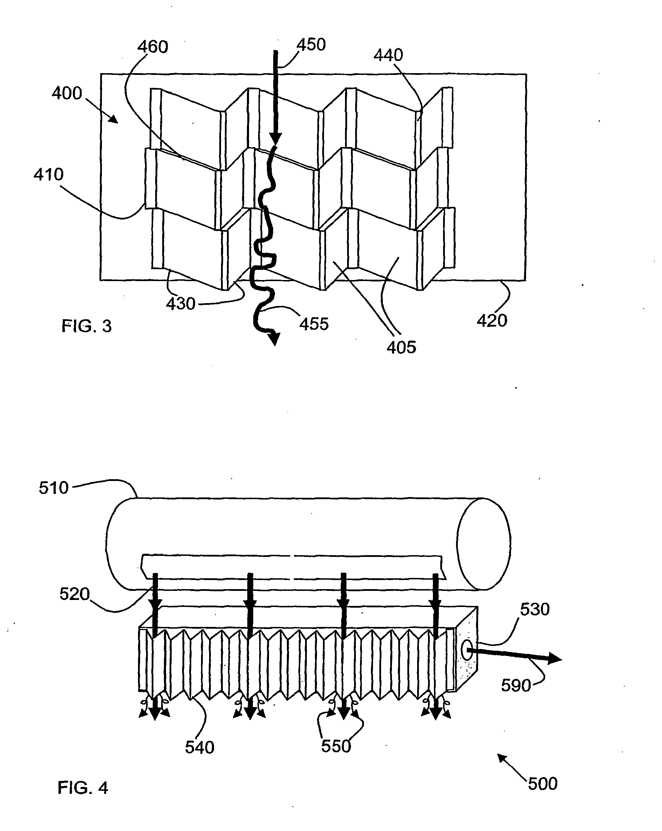

Figure 3 illustrates a second embodiment including folded heat conductive material, forming a fin array 400, attached to a portion of a laser 420. In this particular exemplary embodiment multiple strips of cooling fins are used which are arranged alongside each other such that the fins 405 of adjacent strips are mis-aligned in a staggered or stepped fashion with offsets 460. The fins 405 include base portions 410, end portions 440, and side portions 430 broadly similar to the first embodiment but with the side portions extending at more of an oblique angle relative to the cooling face 420. The offset 460 forms a turbulence inducing feature so that an initial fluid flow 450 can become more turbulent 455 after passing over the offset 460. The offset size can be any size. In example designs, the offset varies from 10% to 90% of the fin separation. The multiple strips of cooling fins can be manufactured from flat sheet using a lancing process to produce lanced offset fins.

Figure 4 illustrates a laser system 500 embodying the invention. A fan 510 blows air 520 through a fin array 540 attached to a laser module 530, which produces a laser beam 590. The air 520 passes over fins of the fin array 540. The fins induce turbulence of air 550 flowing through the fins, thereby increasing the efficiency of heat transfer from the laser module to the cooling fluid.

In at least one exemplary embodiment the fin array is flexible so that it can be compressed or expanded to shape the fin array to fit the portion of the laser attached to and provide the available surface area for convective cooling. The fin array may also in principle be bent if it is ever needed to fit the cooling fin array to a curved cooling face.

It will also be appreciated that although the foregoing embodiments show only one cooling face to which the fin array is attached, fin arrays may be attached to multiple cooling faces on the laser module.

The description of the invention is merely exemplary in nature and, thus, variations that do not depart from the gist of the invention are intended to be within the scope of the embodiments of the present invention. Such variations are not to be regarded as a departure from the scope of the present invention.

## Claims

1. A laser system comprising:
a laser module having a cooling face; and
a heat exchange element constructed as at least one folded sheet of thermally conductive material comprising a plurality of flat portions connected in thermal contact with the cooling face, and a plurality of interconnecting portions extending between the flat portions and away from the cooling face to form cooling fins, wherein
the folded sheet of cooling fins is extensible and compressible by its interconnecting portions, and wherein the folded sheet of cooling fins is configured such that it allows, prior to a bonding of the flat portions to the cooling face, to be extended or compressed by a desired amount and then bonded to the cooling face in an extended or compressed state.

2. The system of claim 1, wherein the cooling fins extend in a plurality of strips arranged alongside each other such that the cooling fins in adjacent ones of the strips are offset from one another.

3. The system of claim 1, wherein the flat portions arc connected to the cooling face with a bond.

4. The system of claim 3, wherein the bond comprises a thermally conductive adhesive.

5. The system of claim 3, wherein the bond comprises a brazing solder.

6. The system of claim 1, wherein the flat portions arc connected to the cooling face with fasteners.

7. The system of claim 1, wherein the interconnecting portions are apertured.

8. A method of assembling a laser package, comprising:
providing a laser module having a cooling face;
providing a folded sheet of thermally conductive material comprising a plurality of flat portions arrangeable on a common plane and a plurality of interconnecting portions extending between the flat portions and away from the common plane to form fins; and
bonding the flat portions of the folded sheet to the cooling face so that the folded sheet forms a heat exchange element for the laser module with the interconnecting portions extending away from the cooling face to form cooling fins, wherein
the folded sheet is extensible and compressible by its interconnecting portions, and wherein prior to said bonding of the flat portions to the cooling face the folded sheet is extended or compressed by a desired amount and then bonded to the cooling face in an extended or compressed state.

9. The method of claim 8, wherein said bonding comprises placing a thermally conductive adhesive between the cooling face and the flat portions of the folded sheet.

10. The method of claim 8, wherein said bonding comprises placing a brazing solder between the cooling face and the flat portions of the folded sheet at an elevated temperature.

11. The method of claim 8 , wherein the folded sheet is extended or compressed by different amounts along different sections thereof so that the flat portions are separated by different amounts in the different sections.

## Patentansprüche

1. Ein Lasersystem, aufweisend:
ein Lasermodul, das eine Kühloberfläche aufweist; und ein Wärmeaustauschelement, konstruiert als zumindest ein gefaltetes Blech von thermisch leitfähigem Material, aufweisend eine Vielzahl von flachen Anteilen, die in thermischem Kontakt mit der Kühloberfläche verbunden sind und eine Vielzahl von Verbindungsanteilen, die sich zwischen den flachen Anteilen und weg von der Kühloberfläche erstrecken, um Kühlrippen zu bilden, wobei
das gefaltete Blech von Kühlrippen ausdehnbar und zusammendrückbar durch ihre Verbindungsanteile ist und wobei das gefaltete Blech von Kühlrippen so konfiguriert ist, dass es erlaubt, vor der Befestigung der flachen Anteile an der Kühloberfläche durch einen gewünschten Betrag ausgedehnt oder zusammengedrückt zu werden und dann an der Kühloberfläche in ausgedehntem oder zusammengedrückten Zustand befestigt zu werden.

2. Das System gemäß Anspruch 1, wobei sich die Kühlrippen in einer Vielzahl von Streifen, die nebeneinander angelegt sind, ausbreiten, so dass die Kühlrippen in benachbarten Streifen versetzt voneinander sind.

3. Das System gemäß Anspruch 1, wobei die flachen Anteile an der Kühloberfläche mit einer Bindung verbunden sind.

4. Das System gemäß Anspruch 3, wobei die Bindung einen thermisch leitfähigen Klebstoff umfasst.

5. Das System gemäß Anspruch 3, wobei die Bindung Lötzinn umfasst.

6. Das System gemäß Anspruch 1, wobei die flachen Anteile an der Kühloberfläche mit Befestigungselementen verbunden sind.

7. Das System gemäß Anspruch 1, wobei die Verbindungsanteile offen sind.

8. Ein Verfahren zum Aneinanderfügen eines Laserpakets, aufweisend:
Bereitstellen eines Lasermoduls, das eine Kühloberfläche hat;
Bereitstellen eines gefalteten Blechs von thermisch leitfähigem Material, das eine Vielzahl von flachen Anteilen aufweist, die in einer gemeinsamen Ebene positioniert sind und eine Vielzahl von Verbindungsanteilen, die sich zwischen den flachen Anteilen und weg von der gemeinsamen Ebene erstrecken, um Rippen zu formen; und
Befestigen der flachen Anteile des gefalteten Blechs auf der Kühloberfläche, so dass das gefaltete Blech ein Wärmeaustauschelement für das Lasermodul bildet mit Verbindungsanteilen, die sich von der Kühloberfläche weg erstrecken, um die Kühlrippen zu bilden, wobei
das gefaltete Blech ausdehnbar und zusammendrückbar durch seine Verbindungsanteile ist, und wobei vor der Befestigung der flachen Anteile an der Kühloberfläche das gefaltete Blech um einen gewünschten Betrag ausgedehnt oder zusammengedrückt wird und dann an der Kühloberfläche in einem ausgedehnten oder zusammengedrückten Zustand befestigt wird.

9. Das System gemäß Anspruch 8, wobei die Befestigung das Plazieren eines thermisch leitfähigen Klebstoffs zwischen der Kühloberfläche und den flachen Anteilen des gefalteten Blechs aufweist.

10. Das System gemäß Anspruch 8, wobei die Befestigung das Platzieren eines Lötzinns zwischen der Kühloberfläche und den flachen Anteilen des gefalteten Blechs bei einer erhöhten Temperatur umfasst.

11. Das Verfahren gemäß Anspruch 8, wobei das gefaltete Blech um verschiedene Beträge ausgedehnt oder zusammengedrückt wird entlang verschiedener Bereichen davon, so dass die flachen Anteile durch verschiedene Beträge in den verschiedenen Bereichen getrennt werden.

## Revendications

1. Un système laser comprenant :
un module laser ayant une face de refroidissement ; et un élément d'échange de chaleur construit sous forme d'au moins une feuille repliée de matériau thermiquement conducteur comprenant une pluralité de parties plates reliées en contact thermique avec la face de refroidissement, et une pluralité de parties d'interconnexion s'étendant entre les parties plates et en éloignement de la face de refroidissement pour former des ailettes de refroidissement, dans lequel
la feuille repliée d'ailettes de refroidissement est extensible et compressible par ses parties d'interconnexion, et dans lequel la feuille repliée d'ailettes de refroidissement est configurée de manière à pouvoir, avant un collage des parties plates sur la face de refroidissement, être étendue ou comprimée d'une quantité
souhaitée et ensuite collée sur la face de refroidissement dans un état étendu ou comprimé.

2. Le système de la revendication 1, dans lequel les ailettes de refroidissement s'étendent en une pluralité de bandes disposées côte à côte entre elles de sorte que les ailettes de refroidissement de bandes qui sont adjacentes soient décalées les unes par rapport aux autres.

3. Le système de la revendication 1, dans lequel les parties plates sont reliées à la face de refroidissement par un collage.

4. Le système de la revendication 3, dans lequel le collage comprend un adhésif thermiquement conducteur.

5. Le système de la revendication 3, dans lequel le collage comprend une soudure de brasure.

6. Le système de la revendication 1, dans lequel les parties plates sont reliées à la face de refroidissement par des attaches.

7. Le système de la revendication 1, dans lequel les parties d'interconnexion comportent des ouvertures.

8. Un procédé d'assemblage d'un bloc laser, comprenant : l'obtention d'un module laser ayant une face de refroidissement ;
l'obtention d'une feuille repliée de matériau thermiquement conducteur comprenant une pluralité de parties plates qui peuvent être configurées sur un plan commun et une pluralité de parties d'interconnexion s'étendant entre les parties plates et en éloignement du plan commun pour former des ailettes ; et
le collage des parties plates de la feuille repliée sur la face de refroidissement de sorte que la feuille repliée forme un élément d'échange de chaleur pour le module laser avec les parties d'interconnexion s'étendant en éloignement de la face de refroidissement pour former des ailettes de refroidissement, dans lequel
la feuille repliée est extensible et compressible par ses parties d'interconnexion, et dans lequel avant ledit collage des parties plates sur la face de refroidissement la feuille repliée est étendue ou comprimée d'une quantité souhaitée et ensuite collée à la face de refroidissement dans un état étendu ou comprimé.

9. Le procédé de la revendication 8, dans lequel ladite solidarisation comprend la mise en place d'un adhésif thermiquement conducteur entre la face de refroidissement et les parties plates de la feuille repliée.

10. Le procédé de la revendication 8, dans lequel ledit collage comprend la mise en place d'une soudure de brasage entre la face de refroidissement et les parties plates de la feuille repliée à une température élevée.

11. Le procédé de la revendication 8, dans lequel la feuille repliée est étendue ou comprimée de quantités différentes le long de sections différentes de celle-ci de sorte que les parties plates soient séparées de quantités différentes dans les différentes sections.
